Europäisches Patentamt

European Patent Office

Office européen des brevets

(11) Publication number: **0 370 536**
A1

# EUROPEAN PATENT APPLICATION

(21) Application number: 89202163.5

(51) Int. Cl.5: **B60K 41/14**

(22) Date of filing: 28.08.89

(30) Priority: 24.11.88 BE 8801331

(43) Date of publication of application:
30.05.90 Bulletin 90/22

(84) Designated Contracting States:
AT CH DE ES FR GB IT LI NL SE

(71) Applicant: VOLVO CAR SINT-TRUIDEN,
naamloze vennootschap
Rellestraat 2
B-3800 Sint-Truiden(BE)

(72) Inventor: Schuermans, Rafael
Vossenstraat 4
B-3630 Maasmechelen(BE)

(74) Representative: Donné, Eddy
Bureau M.F.J. Bockstael nv Arenbergstraat
13
B-2000 Antwerpen(BE)

(54) Control for a continuous variable transmission.

(57) Control for a continuous variable transmission,
whereby the throttle pedal, the throttle valve and the
regulating means of the continuous variable transmission are mutually connected to each other,
characterised in that the connections (8, 9) first run
from the throttle pedal (1) to the regulating means
(5) of the continuous variable transmission (4) and
subsequently run further from these regulation
means (5) to the throttle valve (3).

Fig. 2

## Control for a continuous variable transmission

This invention relates to the control of a so-called continuous variable transmission (CVT), especially for automobiles.

As known such a continuous variable transmission makes use of a V-belt installed between two V-shaped belt pulleys. Each belt pulley is hereby made of two conical pulley halves movable in relation to each other and the transmission ratio is controlled by the pulley halves of at least one of the aforementioned belt pulleys to slide apart more or less axially through which the radius, on which the belt is situated on the belt pulley, changes. The mutual position of the belt pulley halves is controlled in function of various data by means of generally hydraulic regulating means which provide for the movement of one of the pulley halves.

With the known controls for continuous variable transmissions, the aforementioned regulating means which provide for the alteration of the transmission ratio by means of a cable, a rod system or the combination of both, are connected with the throttle valve of the engine which in its turn is again connected with the throttle pedal by means of a cable and/or a rod system.

The connection between the regulating means and the throttle valve is of coure in the first place meant for the adjustment of the desired number of revolutions to the regulating means in function of the position of the throttle valve, such that the regulating means can provide for the setting at this number of revolutions.

It is also known that with a number of continuous variable transmissions the movement of the connections between the throttle pedal and the regulating means of the transmission are applied to give an indication of the torque delivered by the engine. In function of this it is possible to so adjust the belt pulleys of the transmission that in function of the torque to be transferred an appropriate prestressing is established which means that, on the one hand, no slipping occurs and, on the other hand, no excessive strain is exerted which would result in a loss of efficiency of the transmission driving belt. The torque dependent regulation of the controlling forces of the continuous variable transmission is thus of great importance for a favourable transmission efficiency.

Furthermore the connection between the throttle valve and the regulating means of the continuous variable transmission is also applied to deduce from this when a number of special functions must be utilised for the control of the transmission, for example when the throttle pedal is suddenly depressed or suddenly released.

If with the aforementioned known embodiment, thus whereby the control of the regulating means of the continuous variable transmission is effected from the throttle valve, the correct cable and/or rod connection which is hereby applied would be disrupted by for example a wrong adjustment of this cable or rod connection, for example because there is play on it, or through a break in the connection concerned, a too weak torque signal is transmitted to the regulating means, while the control of the throttle valve makes the generation of a high engine torque possible. As a result of this the continuous variable transmission is automatically adjusted to a lower engine torque than is effectively present, which results in the slipping of the driving belt, through which considerable damage is caused to the transmission, among others by heat generation, wear on the belt pulleys and damage to the driving belt.

The present invention has an object a control which does not present the aforementioned disadvantages. For this purpose the invention concerns a control for a continuous variable transmission, whereby the throttle pedal, the throttle valve and the regulating means of the continuous variable transmission are mutually connected to each other, with the characteristic that the connection first runs from the throttle pedal to the regulating means of the continuous variable transmission and subsequently runs further from these regulation means to the throttle valve. It is therefore achieved that with a wrong adjustment of the cable and/or rod connection between the throttle pedal and the continuous variable transmission, the throttle valve always generates a lower torque than the torque which the transmission can handle. Furthermore this construction offers the advantage that in the case of a break in the cable and/or rod connection immediately in front of the regulation means of the variable transmission also no further engine torque can be generated through the depression of the throttle pedal, since through such a break the operation of the throttle valve is also excluded.

In order to show better the characteristics according to the present invention, a preferred embodiment is described hereafter, as example and without any restrictive character, with reference to the enclosed drawings, in which:

figure 1 shows schematically the existing control always utilised until now;

figure 2 shows the control for a continous variable transmission according to the invention.

In the figures the throttle pedal 1, the engine 2, the throttle valve 3, the continuous variable transmission 4 and the regulating means 5 for this transmission are shown schematically. Such transmission 4 is in itself sufficiently known and is then also not further explained in this detailed description.

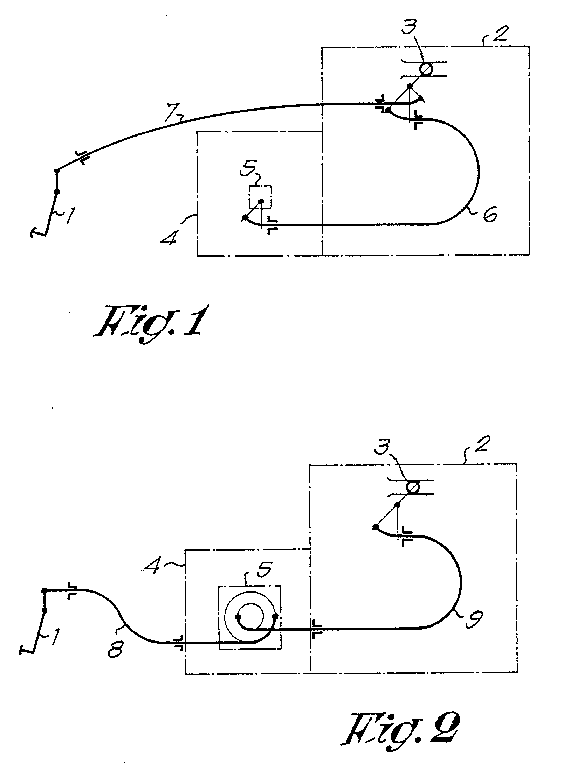

With all known controls, as shown in figure 1, the controlling of the regulating means 5 occurs in function of the movement of the throttle valve 3, while this throttle valve 3 is in turn commanded by the throttle pedal 1. For this purpose use is made of cable and/or rod connections, respectively a first connection 6 between the regulating means 5 and the throttle valve 3 and, on the other hand, a second connection 7 between the throttle valve 3 and the throttle pedal 1.

It is clear that when a fault occurs in the connection 6, for example in the form of play or a breakage, the regulating means no longer receive correct information through which the disadvantages mentioned in the introduction can arise.

According to the present invention a solution to the aforementioned problem is given through not letting the aforementioned connection run via the throttle valve 3 to the continuous variable transmission 4, but by providing connections, respectively 8 and 9, which first connect the throttle pedal 1 with the continuous variable transmission and subsequently connect the throttle valve with the continuous variable transmission 5. This has the advantage that also in the case that play arises on the rod or cable connections 8 or 9, the throttle valve always generates a lower torque than the torque which the continuous variable transmission can handle, by which slipping is excluded. In the case that one of the connections 8 or 9 breaks, no further engine torque can be generated.

The present invention is in no way restricted to the embodiment described as example and shown in the drawings, but such control for continuous variable transmissions may be developed in all kinds and forms and dimensions without departing from the scope of the present invention.

## Claims

1.- Control for a continuous variable transmission, whereby the throttle pedal, the throttle valve and the regulating means of the continuous variable transmission are mutually connected to each other, characterised in that the connections (8, 9) first run from the throttle pedal (1) to the regulating means (5) of the continuous variable transmission (4) and subsequently run further from these regulation means (5) to the throttle valve (3).

2.- Control for a continuous variable transmission according to claim 1, characterised in that the connections (8, 9) consist of cable and/or rod connections.

*Fig.1*

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A- 427 522 (REIMERS)<br>* Whole document *<br>--- | 1,2 | B 60 K 41/14 |
| Y | US-A-4 086 823 (TOWMOTOR CORP.)<br>* Whole document *<br>--- | 1,2 | |
| A | NL-A- 48 464 (AUTO UNION)<br>* Whole documnt *<br>--- | 1,2 | |
| A | FR-A-2 444 586 (PORSCHE)<br>* Page 1, lines 1-20; figure 2 *<br>--- | 1,2 | |
| A | REVUE TECHNIQUE AUTOMOBILE, vol. 33,<br>October 1978, page 187<br>----- | 1,2 | |

TECHNICAL FIELDS SEARCHED (Int. Cl.5)

B 60 K

The present search report has been drawn up for all claims

| Place of search | Date of completion of the search | Examiner |
|---|---|---|
| THE HAGUE | 20-10-1989 | TOPP-BORN S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)